# EUROPÄISCHE PATENTSCHRIFT

(11) **EP 1 239 729 B1**
(45) Veröffentlichungstag und Bekanntmachung des Hinweises auf die Patenterteilung: **04.02.2004**
(21) Anmeldenummer: 00985018.1
(22) Anmeldetag: 13.11.2000
(51) Int. Cl.: A01N 37/10, A01N 37/40, A01N 25/02, B08B 3/04

(54) **DESINFEKTIONSMITTELKONZENTRAT**
DISINFECTANT AGENT CONCENTRATE
CONCENTRE D'AGENT DESINFECTANT

(30) Priorität: 21.12.1999 EP 99125556
(43) Veröffentlichungstag der Anmeldung: 18.09.2002
(73) Patentinhaber: Chemische Fabrik Dr. Weigert GmbH & Co. KG., 20539 Hamburg (DE)
(72) Erfinder: KÜHNAU, Birgit, 22047 Hamburg (DE); SCHREIBER, Olaf, 22145 Hamburg (DE); WAGEMANN, Wolfgang, 22967 Tremsbüttel (DE)
(74) Vertreter: Glawe, Delfs, Moll & Partner
(86) Internationale Anmeldenummer: PCT/EP2000/011206
(87) Internationale Veröffentlichungsnummer: WO 2001/045507

(56) Entgegenhaltungen:
- EP-A- 0 265 202
- WO-A-95/35364
- DE-A- 3 229 097
- CHEMICAL ABSTRACTS, vol. 103, no. 14, 7. Oktober 1985 (1985-10-07) Columbus, Ohio, US; abstract no. 110933, GOMAA, E. A. ET AL: "Association, dissociation and hydrogen bonding of salicylic acid in water-N,N- dimethylformamide mixtures" XP002139143 & THERMOCHIM. ACTA (1985), 89, 133-9, 1985,

## Beschreibung

Die Erfindung betrifft ein flüssiges Desinfektionsmittelkonzentrat sowie dessen Verwendung bei der CIP-Reinigung von Anlagen der Lebensmittel- und Getränkeindustrie.

Das CIP(cleaning in place)-Reinigen von Anlagen der Lebensmittel- und Getränkeindustrie wie beispielsweise Tanks und Rohrleitungen ist aus offenkundiger Vorbenutzung bekannt. Die zu reinigende Anlage wird mit einer oder sequentiell mit mehreren Reinigungs- und/oder Desinfektionslösungen gespült. Die Reinigungslösungen werden nach Möglichkeit aufgefangen und mehrfach verwendet (Stapelreinigung). Insbesondere in der Lebensmittel- und Getränkeindustrie ist eine einwandfreie Desinfektion gereinigter Flächen wichtig.

Neben der Verwendung von Peressigsäure und Halogenessigsäuren ist es aus offenkundiger Vorbenutzung bereits bekannt, eine salicylsäurehaltige Desinfektionslösung zu verwenden, die aus zwei getrennten Konzentraten angesetzt wird. Dies ist aufwendig. DE 32 29 097 A, EP-A-0 265 202, WO-A-95/35364 sowie Chemical Abstracts, Vol. 103, No. 14, 7; Abstract No. 110933, & Thermochim. Acta (1985), 89, 133-9 offenbaren tensidhaltige Lösungen. Diese weisen den Nachteil auf, daß sie in der Rgel lange Nachspülzeiten erfordern. Das ist bei der CIP-Reinigung unwirtschaftlich.

Der Erfindung liegt die Aufgabe zugrunde, ein Desinfektionsmittelkonzentrat zu schaffen, das mit geringem Aufwand das Ansetzen einer wirksamen, leicht ausspülbaren und mehrfach verwendbaren (stapelbaren) Desinfektionslösung zur Verwendung in CIP-Verfahren erlaubt.

Das erfindungsgemäße flüssige tensidfreie Desinfektionsmittelkonzentrat weist folgende Inhaltsstoffe auf:
- Benzoesäure und/oder ein mikrobiozides Benzoesäurederivat in einer Konzentration von 1 - 15 Gew.-%, ausgewählt aus der Gruppe bestehend aus Salicylsäure, p-Hydroxybenzoesäure und p-Chlorbenzoesäure,
- wenigstens ein organisches Lösungsmittel für die Benzoesäure und/oder deren Derivat(e), das mit Wasser mischbar oder in Wasser löslich ist,
- wenigstens eine Säure und/oder Puffersubstanz zur Einstellung eines sauren pH-Wertes.

Zunächst seien einige im Rahmen der Erfindung verwendete Begriffe erläutert.

Als Desinfektionswirkstoff verwendet das erfindungsgemäße Konzentrat Benzoesäure und/oder ein mikrobiozides Benzoesäurederivat ausgewählt aus der Gruppe bestehend aus Salicylsäure, p-Hydroxybenzoesäure und p-Chlorbenzoesäure. Mikrobiozid bedeutet im Rahmen der Erfindung, daß das Derivat unter Anwendungsbedingungen bei der CIP-Reinigung eine keimabtötende Wirkung auf Bakterien und/oder Pilze aufweist.

Das Desinfektionsmittelkonzentrat ist tensidfrei. Dies bedeutet, daß es keine Tenside enthält. Tenside umfassen die Gruppen der anionischen Tenside (Seifen, Alkylsulfonate, Alkylsulfate), der nicht ionogenen Tenside (Fettalkoholethoxylate, Alkylphenolethoxylate), der kationischen Tenside (quartäre Ammoniumverbindungen) und der amphoteren Tenside (N-(Acylamidoalkyl)-betaine).

Das Konzentrat enthält ferner wenigstens ein organisches Lösungsmittel für die Benzoesäure bzw. deren Derivate. Die Löslichkeit der Benzoesäure bzw. des Derivats in diesem Lösungsmittel sowie in dem Gesamtkonzentrat, das dieses Lösungsmittel enthält, muß hinreichend hoch sein, daß sich beim Anmischen des Konzentrats zu einer CIP-Reinigungslösung darin eine mikrobiozid wirksame Konzentration von Benzoesäure bzw. deren Derivaten einstellt. Die Benzoesäure bzw. deren Derivate sollen in dem Desinfektionsmittelkonzentrat mit diesem Lösungsmittel vorzugsweise zu wenigstens 1 Gew.-%, weiter vorzugsweise wenigstens 2 Gew.-% löslich sein. Erfindungsgemäß liegt der Anteil des Mikrobiozids im Konzentrat zwischen 1 bis 15 Gew.-%, vorzugsweise 3 und 15 Gew.-%, weiter vorzugsweise 4 und 12 Gew.-% bzw. 2 und 10 Gew.-%.

Dieses Lösungsmittel soll mit Wasser mischbar im Sinne einer vollständigen Mischbarkeit oder aber in Wasser löslich sein. Der technische Zweck dieses Merkmals liegt darin, daß beim Ansetzen einer CIP-Desinfektionsmittellösung mit dem erfindungsgemäßen Konzentrat sich eine einphasige wäßrige Lösung herstellen läßt.

Erfindungsgemäß ist ferner wenigstens eine Säure und/oder Puffersubstanz zur Einstellung eines sauren pH-Wertes (pH < 7) enthalten. Diese saure pH-wert muß sich einstellen nicht nur im Konzentrat, sondern auch in einer wäßrigen Desinfektionsmittellösung, die das Konzentrat in der vorgesehenen Anwendungskonzentration enthält. Zweck des sauren pHWertes ist es, dafür zu sorgen, daß die Benzoesäure bzw. deren Derivate zu einem technisch relevanten Anteil in undissoziierter Form vorliegen, da nur diese undissoziierte Form mikrobiozid wirksam ist. Dementsprechend ist der pH-Wert vorzugsweise kleiner oder gleich 2,5, weiter vorzugsweise kleiner oder gleich 2. Er wird in der Regel den Wert von 1,2, vorzugsweise 1,4, nicht unterschreiten. Diese pH-Werte beziehen sich wieder auf die mittels des erfindungsgemäßen Konzentrats angesetzten fertigen Desinfektionsmittellösungen, die zur CIP-Reinigung verwendet werden. Der Ansatz einer Desinfektionslösung erfolgt durch Verdünnen des erfindungsgemäßen Konzentrats mit Wasser in einem Verhältnis von vorzugsweise 1:20 bis 1:1000, besonders bevorzugt etwa 1:50 bis 1:200.

Der Kern der Erfindung liegt darin, ein Desinfektionsmittelkonzentrat auf der Basis Benzoesäure bzw. Benzoesäurederivate als sogenanntes Eintopfkonzentrat zur Verfügung zu stellen, das mit Wasser unmittelbar zu einer anwendungsfertigen Desinfektionslösung für CIP-Zwecke verdünnt werden kann. Technisch ist dies nicht trivial, da einerseits, wie vorstehend erwähnt, die Säure nur in ihrer undissoziierten Form mikrobiozid wirksam ist (siehe hierzu auch Wallhäußer, Praxis der Sterilisation, Georg Thieme Verlag, Stuttgart (1988), Seite 481 f.). Andererseits ist diese undissoziierte Säure aber nur geringfügig wasserlöslich und kann daher nicht in einem wäßrigen Konzentrat formuliert werden, ohne auszukristallisieren.

Die bereits genannte offenkundige Vorbenutzung (das sogenannte Dual-CIP-Verfahren der Firma DiverseyLever) schlägt daher vor, die Desinfektionslösung aus zwei getrennten Bestandteilen anzusetzen, von denen der eine eine wäßrige Salicylatlösung enthält (Salze der Salicylsäure sind gut wasserlöslich) und der andere Mineralsäuren, so daß die mikrobiozid wirksame Salicylsäure erst in situ beim Zusammengeben der beiden Bestandteile entstehen soll.

Die Erfindung hat erkannt, daß sich dieses aufwendige Ansetzen der Desinfektionslösung aus zwei getrennten Bestandteilen vermeiden läßt durch eine vorstehend definierte Zusammensetzung. Das erfindungsgemäß eingesetzte organische Lösungsmittel sorgt dafür, daß die Benzoesäure bzw. deren Derivate im Konzentrat in Lösung bleiben, obwohl sie in undissoziierter Form vorliegen. Das erfindungsgemäße Konzentrat kann daher gleichzeitig als sogenanntes Eintopfkonzentrat die erforderliche Menge Säure und/oder Puffersubstanz zur Einstellung des erforderlichen sauren Milieus in der fertigen Desinfektionslösung enthalten, ohne daß es zu einer Ausfällung von Salicylsäure oder einer anderen verwendeten Benzoesäure kommt. Erstmals ist erfindungsgemäß somit die Kombination des mikrobioziden Wirkstoffes wie beispielsweise Salicylsäure einerseits und der erforderlichen Säure andererseits in einem einzigen Konzentrat möglich.

Als organische Lösungsmittel sind Alkohole, insbesondere einund zweiwertige Alkohole, besonders bevorzugt. Bevorzugt sind Glykole wie Ethylen- und Propylenglykole, deren höhere Homologe und Derivate (z. B. Diglykolether). Erfindungsgemäß können beispielsweise verwendet werden Isopropanol, n-Propanol, Ethylenglykol, Diethylenglykol, Propylenglykol, Dipropylenglykol, Butylglykol und Butyldiglykol. Butyldiglykol oder eine Mischung von Butyldiglykol mit anderen Alkoholen ist besonders bevorzugt. Ebenfalls bevorzugt sind aprotische dipolare Lösungsmittel wie z.B. DMF (Dimethylformamid), DMSO (Dimethylsulfoxid) und NMP (N-Methylpyrrolidon).

Als Säuren werden bevorzugt Mineralsäuren und/oder organische Säuren verwendet. Bevorzugt sind beispielsweise Schwefelsäure und Phosphorsäure, andere Mineralsäuren wie Salzsäure und Salpetersäure können ebenfalls verwendet werden. Als organische Säuren können beispielsweise verwendet werden Ameisensäure, Essigsäure, Propionsäure, Glykolsäure, Maleinsäure, Malonsäure sowie deren Homologe (Bersteinsäure, Adipinsäure etc.) und die sogenannten Fruchtsäuren (beispielsweise Zitronensäure, Äpfelsäure, Weinsäure und dergleichen). Bevorzugt ist ein solcher Mineralsäuregehalt, daß sich in der mittels des erfindungsgemäßen Konzentrats angesetzten Desinfektionslösung eine ausreichende elektrische Leitfähigkeit einstellt, so daß die Leitfähigkeitsmeßsonden von CIP-Anlagen bei der Stapelreinigung die Desinfektionslösung anhand ihrer Leitfähigkeit von vorausgeschicktem oder nachfolgendem Spülwasser mit geringerer Leitfähigkeit unterscheiden können und damit eine Trennung der jeweiligen Reinigungsstapel in bekannter Weise vornehmen können.

Gewöhnlich werden im Stand der Technik Desinfektions- und Reinigungsmittel mit Tensiden versetzt, die zur Herabsetzung der Oberflächenspannung führen und dadurch die Reinigungswirkung verbessern. DE-A-3229097 beschreibt Desinfektionsmittel, die im wesentlichen aus organischen Säuren und anionischen Tensiden vom Typ der Alkylsulfonate und der Alkylsulfate zusammengesetzt sind und der Verwendung in Großküchen und im Küchenbereich von Haushaltungen dienen. Es wird offenbart, daß die Kombination organischer Säuren mit Alkylsulfonaten oder -sulfaten mikrobiozide Wirkung zeigt, während die Einzelkomponenten - laut diesem Dokument - eine solche Wirkung nicht besitzen. Überraschenderweise zeigt das hier beschriebene Desinfektionsmittelkonzentrat trotz des Verzichts auf Tenside mikrobiozide Wirkung. Infolge der Abwesenheit der Tenside verbessert sich die Ausspülbarkeit der Anlagen, was insbesondere für die CIP-Reinigung einen entscheidenden Vorteil darstellt.

Die obige Aufzählung möglicher Bestandteile des Reinigungsmittelkonzentrats ist nicht abschließend. Es können weitere übliche Bestandteile von Reinigungs- oder Desinfektionsmitteln enthalten sein, wie beispielsweise Lösevermittler (Cumolsulfonat, Phosphorsäureester oder dergleichen), und dergleichen. Bei gering verschmutzten Anlagen kann es ausreichend sein, ausschließlich mit dem erfindungsgemäßen Desinfektionsmittelkonzentrat sowohl zu reinigen als auch zu desinfizieren und anschließend nachzuspülen, da es durch den Säuregehalt auch eine gewisse Reinigungswirkung entfaltet.

Der Gehalt an organischen Lösungsmitteln des erfindungsgemäßen Konzentrats beträgt vorzugsweise 15 bis 75 Gew.-%, weiter vorzugsweise 20 bis 50 Gew.-%, weiter vorzugsweise 40 bis 50 Gew.-%. Der Säuregehalt liegt bevorzugt zwischen 10 und 60 Gew.-%, weiter vorzugsweise 25 bis 55 Gew.-%, weiter vorzugsweise 30 bis 50 Gew.-%. Es muß einerseits genügend Lösemittel vorhanden sein, um die Benzoesäure bzw. deren Derivate in Lösung zu halten, andererseits braucht man ausreichende Säuremengen, um auch nach einer starken Verdünnung auf Anwendungskonzentration mit Wasser das gewünschte saure Milieu in der fertig angesetzten Lösung beizubehalten.

Gegenstand der Erfindung ist ferner die Verwendung eines solchen Desinfektionsmittelkonzentrats zur Reinigung, insbesondere CIP-Reinigung, von Anlagen der Lebensmittel- und Getränkeindustrie. Das Konzentrat wird mit Wasser zu einer Anwendungslösung verdünnt, so daß sich in dieser Lösung vorzugsweise ein Gehalt von Benzoesäure und/oder mikrobioziden Benzoesäurederivaten von 0,01 bis 0,1 Gew.-%, vorzugsweise 0,02 bis 0,08 Gew.-% ergibt. In der Regel wird man zu diesem Zweck das Konzentrat in einem Verhältnis von 1:20 bis 1:1000 mit Wasser verdünnen. Die Desinfektionslösung kann in einem dem Fachmann geläufigen Stapelverfahren wieder aufgefangen und mehrfach verwendet werden. Vorzugsweise besitzt die Anwendungslösung eine ausreichende Leitfähigkeit, so daß sie mittels Leitfähigkeitssensoren in der zu reinigenden Anlage von vorlaufendem oder nachfolgendem Spülwasser unterschieden und mittels geeigneter Einrichtungen abgetrennt werden kann.

Der Begriff "CIP-Reinigung" ist im Rahmen dieses Anspruchs weit zu verstehen und umfaßt Schritte, bei denen entweder eine desinfizierende oder eine reinigende Wirkung oder beides auf die mit der entsprechenden Lösung beaufschlagten Anlagenteile ausgeübt wird.

Die Temperatur bei dem Reinigungs- bzw. Desinfektionsvorgang beträgt vorzugsweise 0 bis 95°C, weiter vorzugsweise 0 bis 60°C, weiter vorzugsweise 0 bis 40°C, weiter vorzugsweise 4 bis 30°C. Die aus dem erfindungsgemäßen Konzentrat angesetzte Lösung besitzt eine ausreichende mikrobiozide Wirkung bei sämtlichen Temperaturen, die in Anlagen der Lebensmittel- und Getränkeindustrie üblich sind. Man wird daher in der Regel bei den Temperaturen reinigen können, bei denen diese Anlagen üblicherweise verwendet werden. Von besonderem Vorteil ist dies bei der Reinigung von Anlagen der Brauereiindustrie. Insbesondere im Kellerbereich (Gärung, Lagerung, Filbration) herrschen in Tanks und Anlagen üblicherweise niedrige Temperaturen von etwa 6°C. Bei dieser Temperatur kann erfindungsgemäß ohne weiteres gereinigt werden. Die erfindungsgemäße Reinigung ist ferner unter CO₂-Atmosphäre möglich, die zu reinigenden Tanks und Anlagen müssen nicht zunächst von CO₂ befreit und belüftet werden.

In der nachfolgenden Tabelle sind acht Ausführungsbeispiele eines erfindungsgemäßen Desinfektionsmittelkonzentrats angegeben.

| **Inhaltsstoffe** | **Beispiele:** | | | | | |
|---|---|---|---|---|---|---|
| | **1** | **2** | **3** | **4** | **5** | **6** |
| VE-Wasser | 26,7 | 24,2 | 34,5 | 22 | 10,2 | 29 |
| Butyldiglykol | 35 | 40 | -- | -- | 48 | 35 |
| N-Methyl-Pyrrolidon | -- | -- | -- | 35 | -- | -- |
| Butylglykol | -- | -- | 25 | -- | -- | -- |
| Benzoesäure | -- | -- | -- | -- | -- | 2 |
| Salicylsäure | 4 | -- | 2 | 4 | 10 | -- |
| p-Hydroxy-Benzoesäure | -- | 4 | -- | -- | -- | -- |
| Phosphorsäure | 12 | 12 | 15 | 15 | 12 | -- |
| Schwefelsäure | 2,8 | 2,8 | 3,5 | 4 | 2,8 | 3,5 |
| Salpetersäure | -- | -- | -- | -- | -- | -- |
| Essigsäure | -- | -- | -- | -- | -- | 3 |
| Glykolsäure | -- | --- | -- | -- | -- | 3 |
| Zitronensäure | -- | -- | -- | -- | -- | 5 |
| 1,2- Propylenglykol | -- | -- | -- | -- | -- | -- |
| Ameisensäure | 17 | 17 | 20 | 20 | 17 | 17 |
| Isopropanol | 2,5 | -- | -- | -- | -- | 2,5 |

Sämtliche Angaben in der Tabelle sind Gewichtsanteile der jeweiligen Inhaltsstoffe. Der Anteil "Wasser, vollentsalzt" beinhaltet nicht zusätzliches Restwasser, das durch die übrigen Inhaltsstoffe in das Konzentrat gelangen kann. Sämtliche Konzentrate gemäß den Beispielen 1 bis 8 sind klare Lösungen, aus denen auch bei Aufbewahrung im Kühlschrank bei 6°C nichts auskristallisiert. Sie können mit Wasser auf die gewünschte Anwendungskonzentration verdünnt und in einem üblichen CIP-Reinigungsverfahren als Desinfektionslösung verwendet werden.

## Patentansprüche

1. Flüssiges tensidfreies Desinfektionsmittelkonzentrat, **dadurch gekennzeichnet, daß** es folgende Inhaltsstoffe enthält:
- Benzoesäure und/oder ein mikrobiozides Benzoesäurederivat in einer Konzentration von 1 bis 15 Gew.-%, ausgewählt aus der Gruppe bestehend aus Salicylsäure, p-Hydroxybenzoesäure und p-Chlorbenzoesäure
- wenigstens ein organisches Lösungsmittel für die Benzoesäure und/oder deren Derivat(e), das mit Wasser mischbar oder in Wasser löslich ist,
- wenigstens eine Säure und/oder Puffersubstanz zur Einstellung eines sauren pH-Wertes.

2. Flüssiges Desinfektionsmittelkonzentrat nach Anspruch 1, **dadurch gekennzeichnet, daß** der pH-Wert kleiner oder gleich 2,5 ist.

3. Flüssiges Desinfektionsmittelkonzentrat nach Anspruch 2, **dadurch gekennzeichnet, daß** der pH-Wert kleiner oder gleich 2 ist.

4. Flüssiges Desinfektionsmittelkonzentrat nach einem der Ansprüche 1 bis 3, **dadurch gekennzeichnet, daß** es als organisches Lösungsmittel wenigstens einen Alkohol enthält.

5. Flüssiges Desinfektionsmittelkonzentrat nach Anspruch 4, **dadurch gekennzeichnet, daß** der Alkohol ausgewählt ist aus der Gruppe bestehend aus ein- und zweiwertigen Alkoholen.

6. Flüssiges Desinf ektionsmittelkonzentrat nach Anspruch 5, **dadurch gekennzeichnet, daß** der Alkohol ausgewählt ist aus der Gruppe bestehend aus Isopropanol, n-Propanol, Ethylenglykol, Diethylenglykol, Propylenglykol, Dipropylenglykol, Butylglykol und Butyldiglykol.

7. Flüssiges Desinfektionsmittelkonzentrat nach einem der Ansprüche 1 bis 6, **dadurch gekennzeichnet, daß** das organische Lösungsmittel wenigstens ein dipolares aprotisches Lösungsmittel enthält.

8. Flüssiges Desinfektionsmittelkanzentrat nach Anspruch 7, **dadurch gekennzeichnet, daß** das dipolare aprotische Lösungsmittel ausgewählt ist aus der Gruppe bestehend aus DMF, DMSO und NMP.

9. Flüssiges Desinfektionsmittelkonzentrat nach einem der Ansprüche 1 bis 8, **dadurch gekennzeichnet, daß** die Säuren ausgewählt sind aus der Gruppe bestehend aus Mineralsäuren und organischen Säuren.

10. Flüssiges Desinfektionsmittelkonzentrat nach Anspruch 9, **dadurch gekennzeichnet, daß** die Mineralsäuren ausgewählt sind aus der Gruppe bestehend aus Schwefelsäure und Phosphorsäure.

11. Flüssiges Desinfektionsmittelkonzentrat nach Anspruch 9 oder 10, **dadurch gekennzeichnet, daß** die organischen Säuren ausgewählt sind aus der Gruppe bestehend aus Ameisensäure, Essigsäure, Propionsäure, Glykolsäure, Maleinsäure, Malonsäure und deren Homologe, und Fruchtsäuren.

12. Flüssiges Desinfektionsmittelkonzentrat nach einem der Ansprüche 1 bis 11, **dadurch gekennzeichnet, daß** der Gehalt an Benzoesäure und/oder mikrobioziden Benzoesäurederivaten 2 bis 10 Gew.-% beträgt.

13. Flüssiges Desinfektionsmittelkonzentrat nach einem der Ansprüche 1 bis 12, **dadurch gekennzeichnet, daß** der organische Lösemittelgehalt 15 bis 75 Gew.-% beträgt.

14. Flüssiges Desinfektionsmittelkonzentrat nach Anspruch 13, **dadurch gekennzeichnet, daß** der organische Lösemittelgehalt 20 bis 50 Gew.-% beträgt.

15. Flüssiges Desinfektionsmittelkonzentrat nach Anspruch 14, **dadurch gekennzeichnet, daß** der organische Lösemittelgehalt 40 bis 50 Gew.-% beträgt.

16. Flüssiges Desinfektionsmittelkonzentrat nach einem der Ansprüche 1 bis 15, **dadurch gekennzeichnet, daß** der Säuregehalt 10 bis 60 Gew.-% beträgt.

17. Flüssiges Desinfektionsmittelkonzentrat nach Anspruch 16, **dadurch gekennzeichnet, daß** der Säuregehalt 25 bis 55 Gew.-% beträgt.

18. Flüssiges Desinfektionsmittelkonzentrat nach Anspruch 17, **dadurch gekennzeichnet, daß** der Säuregehalt 30 bis 50 Gew.-% beträgt.

19. Verwendung eines Desinfektionsmittelkonzentrats nach einem der Ansprüche 1 bis 18 zur CIP-Desinfektion und/oder Reinigung von Anlagen der Lebensmittel- und Getränkeindustrie.

20. Verwendung nach Anspruch 19, **dadurch gekennzeichnet, daß** der Gehalt an Benzoesäure und/oder mikrobioziden Benzoesäurederivaten in der CIP-Reinigungslösung 0,01 bis 0,1 Gew.-% beträgt.

21. Verwendung nach Anspruch 20, **dadurch gekennzeichnet, daß** der Gehalt an Benzoesäure und/oder mikrobioziden Benzoesäurederivaten in der CIP-Reinigungslösung 0,02 bis 0,08 Gew.-% beträgt.

22. Verwendung nach einem der Ansprüche 19 bis 21, **dadurch gekennzeichnet, daß** die Temperatur bei dem Reinigungsvorgang 0 bis 95°C beträgt.

23. Verwendung nach Anspruch 22, **dadurch gekennzeichnet, daß** die Temperatur bei dem Reinigungsvorgang 0 bis 60°C beträgt.

24. Verwendung nach Anspruch 23, **dadurch gekennzeichnet, daß** die Temperatur bei dem Reinigungsvorgang 0 bis 40°C beträgt.

25. Verwendung nach Anspruch 24, **dadurch gekennzeichnet, daß** die Temperatur bei dem Reinigungsvorgang 4 bis 30°C beträgt.

## Claims

1. Liquid surfactant-free disinfectant concentrate, **characterized in that** it comprises the following constituents:
- benzoic acid and/or a microbicidal benzoic acid derivative at a concentration of 1 to 15% by weight selected from the group consisting of salicylic acid, p-hydroxybenzoic acid and p-chlorobenzoic acid.
- at least one organic solvent for the benzoic acid and/or derivative(s) thereof, which solvent is water-miscible or water-soluble,
- at least one acid and/or buffer substance for setting an acid pH.

2. Liquid disinfectant concentrate according to Claim 1, **characterized in that** the pH is less than or equal to 2.5.

3. Liquid disinfectant concentrate according to Claim 2, **characterized in that** the pH is less than or equal to 2.

4. Liquid disinfectant concentrate according to one of Claims 1 to 3, **characterized in that**, as organic solvent, it comprises at least one alcohol.

5. Liquid disinfectant concentrate according to Claim 4, **characterized in that** the alcohol is selected from the group consisting of monohydric and dihydric alcohols.

6. Liquid disinfectant concentrate according to Claim 5, **characterized in that** the alcohol is selected from the group consisting of isopropanol, n-propanol, ethylene glycol, diethylene glycol, propylene glycol, dipropylene glycol, butyl glycol and butyl diglycol.

7. Liquid disinfectant concentrate according to one of Claims 1 to 6, **characterized in that** the organic solvent comprises at least one dipolar aprotic solvent.

8. Liquid disinfectant concentrate according to Claim 7, **characterized in that** the dipolar aprotic solvent is selected from the group consisting of DMF, DMSO and NMP.

9. Liquid disinfectant concentrate according to one of Claims 1 to 8, **characterized in that** the acids are selected from the group consisting of mineral acids and organic acids.

10. Liquid disinfectant concentrate according to Claim 9, **characterized in that** the mineral acids are selected from the group consisting of sulphuric acid and phosphoric acid.

11. Liquid disinfectant concentrate according to Claim 9 or 10, **characterized in that** the organic acids are selected from the group consisting of formic acid, acetic acid, propanoic acid, glycolic acid, maleic acid, malonic acid and homologues thereof, and fruit acids.

12. Liquid disinfectant concentrate according to one of Claims 1 to 11, **characterized in that** the content of benzoic acid and/or microbicidal benzoic acid derivatives is 2 to 10% by weight.

13. Liquid disinfectant concentrate according to one of Claims 1 to 12, **characterized in that** the organic solvent content is 15 to 75% by weight.

14. Liquid disinfectant concentrate according to Claim 13, **characterized in that** organic solvent content is 20 to 50% by weight.

15. Liquid disinfectant concentrate according to Claim 14, **characterized in that** the organic solvent content is 40 to 50% by weight.

16. Liquid disinfectant concentrate according to one of Claims 1 to 15, **characterized in that** the acid content is 10 to 60% by weight.

17. Liquid disinfectant concentrate according to Claim 16, **characterized in that** the acid content is 25 to 55% by weight.

18. Liquid disinfectant concentrate according to Claim 17, **characterized in that** the acid content is 30 to 50% by weight.

19. Use of a disinfectant concentrate according to one of Claims 1 to 18 for CIP disinfection and/or cleaning of equipment of the food and drinks industries.

20. Use according to Claim 19, **characterized in that** the content of benzoic acid and/or microbicidal benzoic acid derivatives in the CIP cleaning solution is 0.01 to 0.1% by weight.

21. Use according to Claim 20, **characterized in that** the content of benzoic acid and/or microbicidal benzoic acid derivatives in the CIP cleaning solution is 0.02 to 0.08% by weight.

22. Use according to one of Claims 19 to 21, **characterized in that** the temperature during the cleaning operation is 0 to 95°C.

23. Use according to Claim 22, **characterized in that** the temperature during the cleaning operation is 0 to 60°C.

24. Use according to Claim 23, **characterized in that** the temperature during the cleaning operation is 0 to 40°C.

25. Use according to Claim 24, **characterized in that** the temperature during the cleaning operation is 4 to 30°C.

## Revendications

1. Concentré d'agent de désinfection exempt de tensioactif, liquide, **caractérisé en ce qu'**il contient les constituants suivants :
- l'acide benzoïque et/ ou un dérivé microbicide de l'acide benzoïque en une concentration allant de 1 à 15% en poids, choisi parmi le groupe consistant en l'acide salicylique, l'acide p-hydroxybenzoïque et l'acide p-chlorobenzoïque ;
- au moins un solvant organique pour l'acide benzoïque et/ou ses dérivés, qui est miscible à l'eau ou soluble dans l'eau, et
- au moins un acide et/ou une substance tampon pour ajuster un pH acide.

2. Concentré d'agent de désinfection liquide selon la revendication 1, **caractérisé en ce que** le pH est inférieur ou égal à 2,5.

3. Concentré d'agent de désinfection liquide selon la revendication 2, **caractérisé en ce que** le pH est inférieur ou égal à 2.

4. Concentré d'agent de désinfection liquide selon l'une quelconque des revendications 1 à 3, **caractérisé en ce qu'**il contient au moins un alcool comme solvant organique.

5. Concentré d'agent de désinfection liquide selon la revendication 4, **caractérisé en ce que** l'alcool est choisi parmi le groupe consistant en les alcools mono- ou bivalents.

6. Concentré d'agent de désinfection liquide selon la revendication 5, **caractérisé en ce que** l'alcool est choisi parmi le groupe consistant en l'isopropanol, le n-propanol, l'éthylèneglycol, le diéthylèneglycol, le propylèneglycol, le dipropylèneglycol, le butylglycol et le butyldiglycol.

7. Concentré d'agent de désinfection liquide selon l'une quelconque des revendications 1 à 6, **caractérisé en ce que** le solvant organique contient au moins un solvant dipolaire aprotique.

8. Concentré d'agent de désinfection liquide selon la revendication 7,
**caractérisé en ce que** le solvant dipolaire aprotique est choisi parmi le groupe consistant en le DMF, le DMSO et la NMP.

9. Concentré d'agent de désinfection liquide selon l'une quelconque des revendications 1 à 8, **caractérisé en ce que** les acides sont choisis parmi le groupe consistant en les acides minéraux et les acides organiques.

10. Concentré d'agent de désinfection liquide selon la revendication 9, **caractérisé en ce que** les acides minéraux sont choisis parmi le groupe consistant en l'acide sulfurique et l'acide phosphorique.

11. Concentré d'agent de désinfection liquide selon la revendication 9 ou 10, **caractérisé en ce que** les acides organiques sont choisis parmi le groupe consistant en l'acide formique, l'acide acétique, l'acide propionique, l'acide glycolique, l'acide maléique, l'acide malonique et leurs homologues, et les acides de fruit.

12. Concentré d'agent de désinfection liquide selon l'une quelconque des revendications 1 à 11, **caractérisé en ce que** la teneur en acide benzoïque et/ou dérivés microbicides d'acide benzoïque se situe dans l'intervalle allant de 2 à 10% en poids.

13. Concentré d'agent de désinfection liquide selon l'une quelconque des revendications 1 à 12, **caractérisé en ce que** la teneur en solvant organique se situe dans l'intervalle allant de 15 à 75% en poids.

14. Concentré d'agent de désinfection liquide selon la revendication 13, **caractérisé en ce que** la teneur en solvant organique se situe dans l'intervalle allant de 20 à 50% en poids.

15. Concentré d'agent de désinfection liquide selon la revendication 14, **caractérisé en ce que** la teneur en solvant organique se situe dans l'intervalle allant de 40 à 50% en poids.

16. Concentré d'agent de désinfection liquide selon l'une quelconque des revendications 1 à 15, **caractérisé en ce que** la teneur en acide se situe dans l'intervalle allant de 10 à 60% en poids.

17. Concentré d'agent de désinfection liquide selon la revendication 16, **caractérisé en ce que** la teneur en acide se situe dans l'intervalle allant de 25 à 55% en poids.

18. Concentré d'agent de désinfection liquide selon la revendication 17, **caractérisé en ce que** la teneur en acide se situe dans l'intervalle allant de 30 à 50% en poids.

19. Utilisation d'un concentré d'agent de désinfection selon l'une quelconque des revendications 1 à 18, pour la désinfection CIP et/ou le nettoyage de dispositifs de l'industrie alimentaire et des boissons.

20. Utilisation selon la revendication 19, **caractérisée en ce que** la teneur en acide benzoïque et/ou dérivés microbiocides d'acide benzoïque se situe dans l'intervalle allant de 0,01 à 0,1% en poids dans la solution de nettoyage CIP.

21. Utilisation selon la revendication 20, **caractérisée en ce que** la teneur en acide benzoïque et/ou dérivés microbiocides d'acide benzoïque se situe dans l'intervalle allant de 0,02 à 0,08% en poids dans la solution de nettoyage CIP.

22. Utilisation selon l'une quelconque des revendications 19 à 21, **caractérisée en ce que** la température se situe dans l'intervalle allant de 0 à 95°C lors du processus de nettoyage.

23. Utilisation selon la revendication 22, **caractérisée en ce que** la température se situe dans l'intervalle allant de 0 à 60°C lors du processus de nettoyage.

24. Utilisation selon la revendication 23, **caractérisée en ce que** la température se situe dans l'intervalle allant de 0 à 40°C lors du processus de nettoyage.

25. Utilisation selon la revendication 24, **caractérisée en ce que** la température se situe dans l'intervalle allant de 4 à 30°C lors du processus de nettoyage.
